(19) Europäisches Patentamt
European Patent Office
Office européen des brevets

(11) Veröffentlichungsnummer: **0 365 800**
**A1**

(12) **EUROPÄISCHE PATENTANMELDUNG**

(21) Anmeldenummer: 89116429.5

(22) Anmeldetag: 06.09.89

(51) Int. Cl.5: **D21G 1/00 , F16F 7/10**

(30) Priorität: 28.10.88 DE 3836746

(43) Veröffentlichungstag der Anmeldung:
02.05.90 Patentblatt 90/18

(84) Benannte Vertragsstaaten:
AT GB SE

(71) Anmelder: SULZER-ESCHER WYSS GMBH
Escher Wyss-Strasse 25 Postfach 1380
D-7980 Ravensburg(DE)

(72) Erfinder: Arnhold, Andreas
Hummelstrasse 7
D-7987 Weingarten(DE)
Erfinder: Münch, Rudolf
Hasenwinkel 4
D-7980 Ravensburg 1(DE)

(54) Verfahren zur aktiven Dämpfung von Schwingungen an einer Papiermaschine und Vorrichtungen zu seiner Durchführung.

(57) Das Verfahren dient zur aktiven Dämpfung von Schwingungen an einer Papiermaschine. Es werden die kinematischen Größen gemessen, die die durch die Schwingungen erzeugten Bewegungen der Papiermaschine bzw. Teilen davon beschreiben. Die kinematischen Größen werden als Meßsignale in einem Regler (5) verarbeitet. Zwischen relativ zueinander beweglichen Massen, von denen mindestens eine zur schwingungsfähigen Struktur (1) der Papiermaschine gehört, ist mindestens ein Stellmotor (2) vorgesehen, der durch den Regler (5) gesteuert wird. Die Bewegung dieses Stellmotors (2) wird in der Weise erzeugt, daß sie der zu dämpfenden Schwingungsbewegung entgegengerichtet ist. Die auf diese Weise erzeugte Bewegung zur Dämpfung der Schwingungen kann sowohl zwischen Teilen der Papiermaschine, als auch zwischen einem Teil der Papiermaschine und einer eigens hierfür angebrachten beweglichen Zusatzmasse (3) erzeugt werden. Zum Abbau der Schwingungsenergie kann ein Dämpfer vorgesehen sein, welcher sich auch in den Stellmotor (2) integrieren läßt. Die Kraftwirkung des Stellmotors kann beispielsweise durch ein Druckmedium, durch Piezo-Kristalle oder durch magnetostriktive Elemente hervorgerufen werden. Mit Hilfe des Verfahrens können gegebenenfalls mehrere Schwingungseigenformen, die an der zu bedämpfenden Papiermaschinenstruktur auftreten, bedämpft werden.

Fig. 1

## Verfahren zur aktiven Dämpfung von Schwingungen an einer Papiermaschine und Vorrichtungen zu seiner Durchführung

Die Erfindung betrifft ein Verfahren zur Dämpfung von Schwingungen der im Oberbegriff des Anspruchs 1 angegebenen Art.

Papiermaschinen enthalten unter anderem ein System von tragenden, überwiegend feststehenden Bauteilen, der sogenannten Stuhlung sowie bewegte Bauteile, insbesondere Walzen, Zylinder, Antriebe und Siebe sowie medienführende Bauteile, insbesondere Stoffauflauf, Behälter und Rohre, welche an bestimmten Stellen miteinander verbunden bzw. aneinandergelagert sind. Es ist seit langem bekannt, daß beim Betrieb einer Papiermaschine Schwingungen auftreten können, die aus den bewegten oder medienführenden Bauteilen stammen oder von der Umgebung der Papiermaschine angeregt sein können. Diese Schwingungen sind für die Funktion der Papiermaschine sowie für die Umgebung der Papiermaschine, z.B. die Fundamente, sehr nachteilig. Selbstverständlich ist jeder Hersteller solcher Papiermaschinen bemüht, bereits die Entstehungen von Schwingungen, z.B. durch sorgfältiges Auswuchten der rotierenden Teile, zu vermeiden. Dennoch läßt sich das Auftreten von Schwingungen nicht verhindern. Solche Schwingungen erfassen zumeist ganz bestimmte Strukturen der Papiermaschine, also Teile, die in besonderer Weise anregbar sind.

Es ist leicht einzusehen, daß wegen der Vielzahl der möglichen Ursachen der Schwingungen und wegen des unterschiedlichen Aufbaus der schwingungsfähigen Strukturen davon auszugehen ist, daß die Schwingungen mit verschiedenen, sich ändernden und kaum vorhersehbaren Frequenzen auftreten können.

Es sind bereits Verfahren oder Vorrichtungen bekannt, mit deren Hilfe solche Schwingungen gedämpft werden sollen. So beschreibt z.B. die deutsche Patentschrift DE 33 16 008 C2 eine Vorrichtung mit wenigstens zwei Schwingungstilgern, die je ein an elastischen Bügeln befestigtes Zusatzgewicht enthalten und in spezieller Weise am Stoffauflauf fest zu machen sind. Besagtes Zusatzgewicht wird durch die Bewegung des Stoffauflaufs ebenfalls zu Bewegungen angeregt. Es werden auch die Vorteile von einer Mehrzahl solcher Schwingungstilger mit jeweils verschiedenen Eigenfrequenzen genannt. Die bekannte Vorrichtung kann jedoch nur in einem schmalen Frequenzband wirksam sein und die Resonanzspitzen in der Nähe der Eigenfrequenz des zu bedämpfenden Bauteils aufspalten. Eine wünschenswerte Umwandlung von Schwingungsenergie, z.B. in Wärme, ist nur in einem sehr geringen Maße durch eventuell vorhandene Eigendämpfung der Federbügel möglich.

Wird ein Verfahren mit einem Zusatzgewicht verwendet, so ist bei der Abstimmung der Größe der Zusatzgewichte unter anderem die Größe der Hauptmasse zu berücksichtigen, das ist die schwingungsfähige Masse der zu bedämpfenden Papiermaschinenstruktur. Es ist dabei bisher nicht zu vermeiden, solche Zusatzgewichte bei schweren zu bedämpfenden Strukturen relativ groß auszuführen. Andererseits ist aber, z.B. aus Gründen des konstruktiven Aufwandes, anzustreben, die Zusatzgewichte möglichst klein zu halten.

Durch die Erfindung soll die Aufgabe gelöst werden, den Stand der Technik dahingehend zu verbessern, daß alle störenden Schwingungen in hohem Maße, möglichst vollständig, absorbiert werden, unabhängig von der Frequenz, in der sie auftreten. Dabei sollen keine zusätzlichen Schwingungskräfte auf die Umgebung der Papiermaschine, z.B. die Fundamente oder Gebäudewände, übergehen. Ferner ist die Masse eines gegebenenfalls verwendeten Zusatzgewichtes möglichst klein zu halten. Diese Aufgaben werden durch die Vorrichtung gemäß den Kennzeichen des Anspruchs 1 gelöst.

Die vorteilhafte Wirkung des Erfindungsgegenstandes beruht darauf, daß die Bewegung des Stellmotors den Steuerbefehlen eines Regelkreises folgt, wobei dieser Regelkreis die kinematischen Größen verarbeitet, die Ausdruck der unerwünschten Schwingungen der zu bedämpfenden Struktur sind. Dadurch wird die Schwingungsbewegung der Papiermaschinenstrukturen äußerst wirksam unterdrückt. Das kann bei allen Frequenzen erfolgen, da die Dämpfungsvorrichtung keine einschränkende Eigenfrequenz besitzt.

Der Kraftangriff des Stellmotors bei Durchführung des erfindungsgemäßen Verfahrens erfolgt vorteilhafterweise entweder zwischen zwei schwingenden Stuhlungsteilen, zwischen der Stuhlung und einem medienführenden Bauteil, z.B. dem Stoffauflauf, der Stuhlung und der begrenzt beweglichen Lagerung eines rotierenden Bauteils, z.B. einer Walze oder der Stuhlung und der gegebenenfalls eigens eingesetzten Zusatzmasse. Es ist darüber hinaus ohne weiteres einsehbar, daß an der zu dämpfenden Struktur der Papiermaschine der Befestigungsort der erfindungsgemäßen Vorrichtung vorzugsweise dorthin zu verlegen ist, wo die Amplitude der auftretenden, zu dämpfenden Schwingung besonders groß ist.

Ferner ist erkannt worden, daß bei Ausführung des Verfahrens unter Verwendung einer oder mehrerer Zusatzmassen das Verhältnis der Zusatzmasse in Relation zur Masse der zu bedämpfenden Papiermaschinenstruktur sehr viel geringer als bei Vorrichtungen nach dem Stand der Technik gehalten werden kann, wobei dennoch eine sehr effektive Verminderung der Schwingungsamplitude an der Papiermaschine erzielbar ist.

Eine vorteilhafte Ausführung des Verfahrens zeigt der Anspruch 9. Danach werden nämlich mindestens zwei solcher Zusatzmassen an einer zu bedämpfenden Struktur der Papiermaschine angebracht, wobei sich eine Anordnung mit horizontalen parallelen Bewegungsrichtungen der Zusatzmassen empfiehlt, und zwar in den - quer zur Maschinenlaufrichtung gesehen - äußeren, entgegengesetzt liegenden Ebenen, dabei spricht man normalerweise von der Trieb- und von der Führerseite. Eine solche Anordnung dämpft nämlich nicht nur die Nickschwingungen in bzw. gegen Maschinenlaufrichtung, sondern auch die Drehschwingungen mit senkrechter Drehachse.

Im weiteren wird der Erfindungsgegenstand näher beschrieben und seine Wirkungsweise und Anwendung werden erklärt. Die Beschreibung bezieht sich auf Zeichnungen, welche zeigen:

Fig. 1 Ausführungsbeispiel mit einem Stellmotor und einer Zusatzmasse, schematisch dargestellt in Seitenansicht

Fig. 2 dasselbe Ausführungsbeispiel in Ansicht von oben

Fig. 3 Ausführungsbeispiel mit einem Stellmotor zwischen zwei Stuhlungsteilen, schematisch dargestellt

Fig. 4 Ausführungsbeispiel mit einem Stellmotor zwischen Stuhlung und Lagerung einer Walze, schematisch dargestellt

Fig. 5 Eigenformen der Schwingungen einer vereinfacht dargestellten Papiermaschinenstruktur

Fig. 6 Diagramm

Fig. 7 Eine Anordnung mit zusätzlichem Federelement.

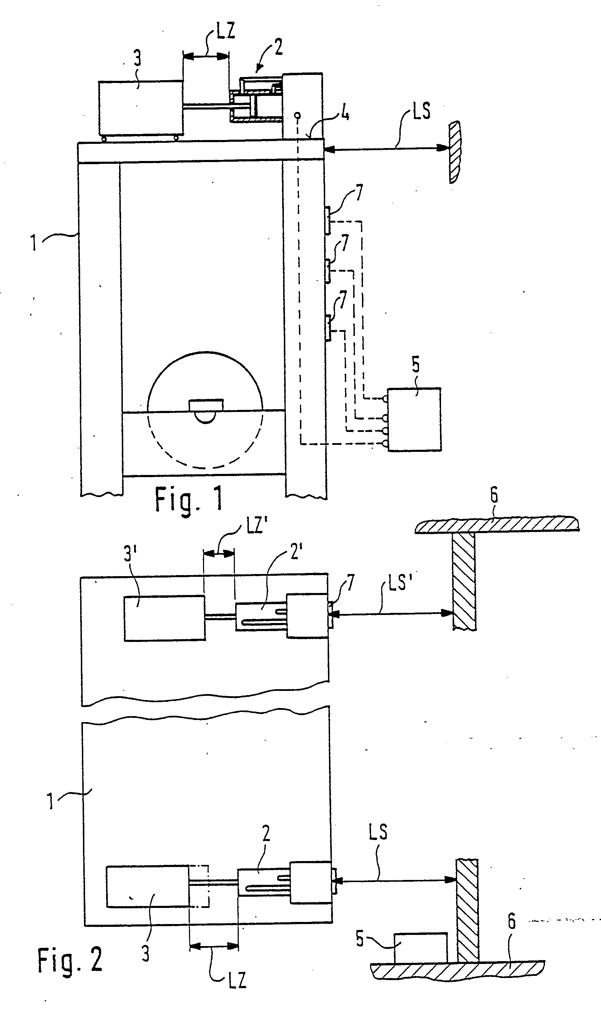

Fig. 1 stellt einen Teil einer Papiermaschinentruktur 1 dar, an der über die Befestigungsstelle 4 ein kraftausübendes Element in Form eines Stellmotors 2 angebracht ist. Der Stellmotor wirkt auf eine eindimensional bewegliche Zusatzmasse 3, wobei die Richtung dieser Bewegung auch den folgenden Messungen zugrunde gelegt wird. In dem Beispiel werden kinematische Größen der Relativbewegung zwischen Zusatzmasse 3 und Stellmotor 2 gemessen, wie etwa die Lage LZ sowie die kinematischen Grössen zwischen der Struktur 1 und der feststehenden Umgebung 6, wie etwa die Lage LS. Vorteilhaft erfolgt die Messung der Lage LS durch einen oder mehrere Dehnmeßstreifen 7, die mit der Struktur 1 fest verbunden sind. Ein Regler 5 verarbeitet die Meßsignale, die ihm durch gestrichelt gezeichnete Signalleitungen zugeleitet werden. Vom Regler 5 gehen Steuerbefehle an den Stellmotor 2, der dann die Zusatzmasse 3 bewegt.

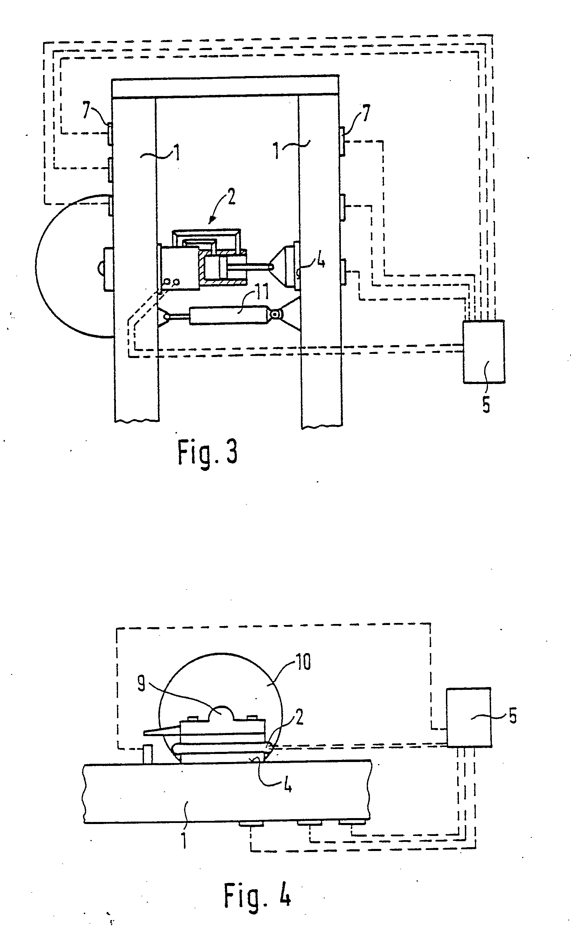

Die dadurch auftretenden Kräfte wirken den Schwingungen der Struktur entgegen. Es ist einsehbar, daß real auftretende Schwingungen sich in verschiedenen Frequenzen überlagern können. Durch bekannte Signalbearbeitungsverfahren ist es aber ein Leichtes, die besagten Frequenzen gegebenenfalls einzeln herauszufiltern. Durch die erfindungsgemäße Ausbildung der Vorrichtung kann die Zusatzmasse 3 in jeder Frequenz bewegt werden. Fig. 3 zeigt eine Ausführung der Erfindung, bei der die relativ zueinander beweglichen Massen durch Teile der Stuhlung der Papiermaschine gebildet werden. An der schwingungsfähigen Struktur 1 ist dabei ein Stellmotor derart angebracht, daß er 2 Teile der Struktur, die relativ zueinander eine Schwingungsbewegung ausführen können, miteinander verbindet. Die Bewegung des Stellmotors 3 wird, wie zuvor beschrieben, durch einen Regler 5 gesteuert. Dann werden die kinematischen Werte an beiden Teilen der Struktur 1 ermittelt. Die Verwendung einer Zusatzmasse erübrigt sich.

Der in Fig. 1 bis 3 dargestellte Stellmotor 2 ist ein hydraulisch betätigtes Zylinder/Kolbensystem, das durch eine nicht gezeigte Pumpe mit einem Druckmedium versorgt wird. Die Steuerimpulse aus dem Regler 5 wirken dann in an sich bekannter Weise auf die den Strom des Druckmediums auf die Vorder- oder Rückseite des Kolbens lenkenden Ventile. Die Strömung des Druckmediums kann durch relativ kleine Querschnitte geführt sein, wobei der im wesentlichen geschwindigkeitsabhängige Druckverlust so gewählt ist, daß damit die Wirkung eines Dämpfers erzielt wird. Die Dämpfung ist aber auch durch einen zusätzlich angebrachten Dämpfer 11, Fig. 3, erzeugbar.

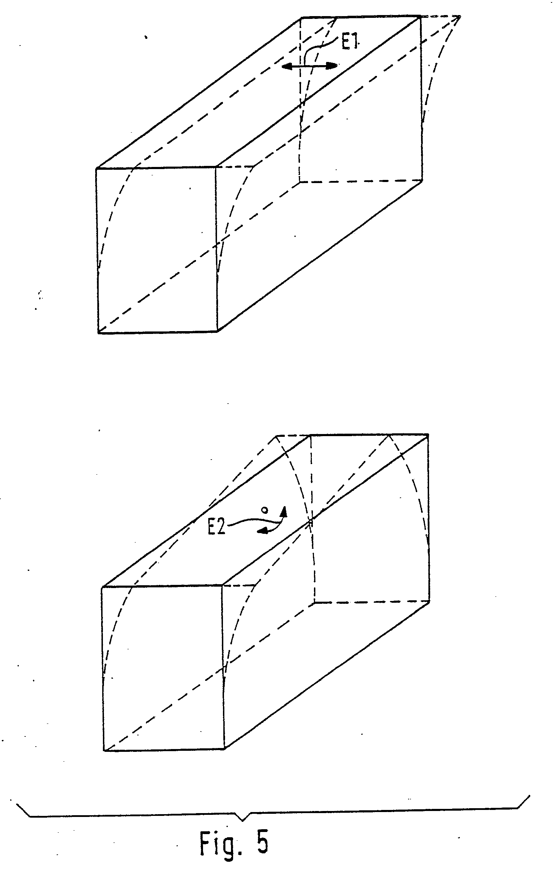

In Fig. 4 ist exemplarisch die Anordnung des Stellmotors 2 zwischen der schwingungsfähigen Struktur 1 und der Lagerung 9 einer Walze 10 gezeigt. Der Stellmotor, der vorteilhaft mit einem Piezokristall oder einem Elektromagnet betrieben werden kann, wird vom Regler 5 gesteuert.

Fig. 5 verdeutlicht zwei Eigenformen der Schwingungen von Papiermaschinenstrukturen. In stark vereinfachter Form ist eine solche Struktur kastenförmig zwei Mal dargestellt und in gestrichelten Linien die Verformung gezeigt, die diese Struktur unter der Wirkung der Eigenformen der Schwingungen erleidet. Die durch den Pfeil E1 gezeigte Bewegung erfolgt aufgrund von Nickschwingungen, der Pfeil E2 zeigt eine Drehschwingung um eine senkrecht stehende Achse. Es ist einzusehen, daß die Eigenformen durch Gestaltung der Struktur und durch die Art der periodischen Erregungen bestimmt werden. Daher sind weitere Eigenformen ohne weiteres denkbar. Die Anwendung des Erfindungsgegenstandes wird sich vorteilhafterweise immer auf die zu dämpfenden Eigenformen richten. Es ist auch möglich, mehrere Eigenformen gleichzeitig zu bedämpfen, wie es z.B. der Anspruch 13 beschreibt.

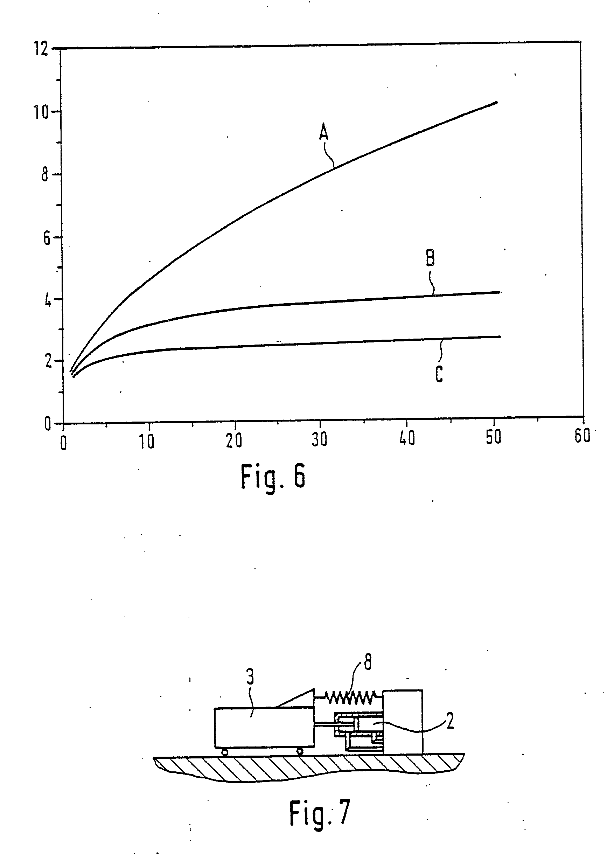

Das Diagramm der Fig. 6 stellt in der Ordinate die maximale Amplitudengröße der Schwingung, bezogen auf die durch die anregende Kraft erzielbare statische Auslenkung der Struktur, dar und in der Abszisse das Verhältnis Masse der schwingungsfähigen Struktur zur Zusatzmasse der erfindungsgemäßen Vorrichtung. Die Kurve A zeigt das Verhalten eines aus dem Stand der Technik bekannten passiven Tilgers, die Kurven B und C die Wirkung des Erfindungsgegenstandes. Parameter der Kurven B und C ist dabei eine durch die mögliche maximale Auslenkung der Zusatzmasse charakterisierte Kennzahl, die sich z.B. aus der Übersetzung des Stellmotors ergibt. Dabei hat B die kleinere und C die größere Auslenkung. Die Darstellung macht deutlich, daß mit der erfindungsgemäßen Vorrichtung auch bei Verwendung einer kleinen Zusatzmasse eine große Dämpfung erzielbar ist.

Das in Fig. 7 schematisch gezeigte zusätzliche Federelement 8 dient als Sicherung, die bei Ausfall der beabsichtigten Funktionen des Erfindungsgegenstandes eine Gefährdung der Anlage durch Aufschaukeln verhindern hilft. Die Vorrichtung wird dadurch zu einem passiven Dämpfer.

In weiterer Ausführung des Erfindungsgegenstandes ist es auch vorstellbar, das Zusatzgewicht in einer mehrdimensionalen Bahn zu bewegen, wozu ein mehrdimensional wirkendes, kraftausübendes Element sowie entsprechend mehrdimensional gerichtete Messungen der kinematischen Größen erforderlich wären.

**Ansprüche**

1. Verfahren zur Dämpfung von Schwingungen an einer Papiermaschine, durch welches Verfahren relativ zueinander bewegliche Massen, von denen mindestens eine zur schwingungsfähigen Struktur (1) der Papiermaschine gehört und wobei die Beweglichkeit durch Führungen oder durch elastische Verformbarkeit erzeugt werden kann, durch mindestens ein formveränderbares kraftausübendes Element (2) miteinander verbunden sind, dessen ausgeübte Kraft gegen die Bewegung der Schwingungen gerichtet ist, dadurch gekennzeichnet, daß das formveränderbare kraftausübende Element ein Stellmotor (2) ist, der von einem Regler (5) gesteuert wird, der Signale verarbeitet, welche durch Messung kinematischer Größen der zueinander beweglichen Massen ermittelt werden.

2. Verfahren nach Anspruch 1, dadurch gekennzeichnet, daß ein auf die Relativbewegung der Massen gerichteter Dämpfer (11) vorhanden ist.

3. Verfahren nach Anspruch 1 oder 2, dadurch gekennzeichnet, daß der Stellmotor (2) in einer solchen Weise an der Papiermaschinenstruktur (1) angreift, daß er zwei Teile der Papiermaschine miteinander verbindet.

4. Verfahren nach Anspruch 3, dadurch gekennzeichnet, daß mindestens eines der miteinander verbundenen Teile zur Stuhlung gehört.

5. Verfahren nach Anspruch 4, dadurch gekennzeichnet, daß mindestens eines der verbundenen Teile zu den medienführenden Teilen gehört.

6. Verfahren nach Anspruch 4, dadurch gekennzeichnet, daß mindestens eines der verbundenen Teile ein gelagertes rotierendes Teil der Papiermaschine ist und der Stellmotor (2) an dessen begrenzt beweglicher Lagerung angreift.

7. Verfahren nach Anspruch 4, dadurch gekennzeichnet, daß mindestens eines der verbundenen Teile ein auf mindestens einem hydraulischen Stützelement gelagertes rotierendes Teil der Papiermaschine ist und daß mindestens ein Stützelement als Stellmotor angesteuert wird.

8. Verfahren nach Anspruch 1 oder 2, dadurch gekennzeichnet, daß mindestens eine der relativ zueinander beweglichen Massen eine eigens zur Durchführung des Verfahrens eingesetzte Zusatzmasse (3,3') ist.

9. Verfahren nach Anspruch 8, dadurch gekennzeichnet, daß zwei Stellmotoren und zwei Zusatzmassen verwendet werden, von denen je eine triebseitig und je eine andere führerseitig an der zu bedämpfenden Struktur der Papiermaschine angebracht sind, wobei die Bewegungen der Zusatzmassen (3,3') horizontal und in und gegen die Maschinenlaufrichtung möglich ist und daß die ermittelten kinematischen Meßgrößen die horizontalen Bewegungen der Struktur in und gegen die Maschinenlaufrichtung erfassen, wodurch Nickschwingungen mit horizontaler quer zur Maschinenlaufrichtung liegender Achse sowie Drehschwingungen mit vertikaler Achse dämpfbar sind.

10. Verfahren nach Anspruch 8 oder 9, dadurch gekennzeichnet, daß eine bzw. eine weitere Zusatzmasse an der zu bedämpfenden Struktur (1) derart angebracht ist, daß sie eine im wesentlichen vertikale Bewegung ausführen kann und daß die ermittelten kinematischen Meßgrößen die vertikalen Bewegungen der Struktur erfassen, wodurch Eigenformen mit vertikalen Schwingungsamplituden dämpfbar sind.

11. Verfahren nach einem der vorangehenden Ansprüche, dadurch gekennzeichnet, daß der Regler eine Einrichtung enthält, die aus den zugeleiteten kinematischen Größen die Schwingungsfrequenzen der Struktur (1) analysieren und eine entsprechende Gegenbewegung zwischen den Massen ansteuern kann.

12. Verfahren nach Anspruch 11, dadurch gekennzeichnet, daß die analysierende Einrichtung die schwingenden Eigenformen der Struktur voneinander separiert, den Schwingungszustand der Eigenformen erkennt und die relativen kinematischen Größen der Zusatzmasse zu den entsprechenden Eigenformen ermittelt.

13. Verfahren nach Anspruch 12, dadurch gekennzeichnet, daß der Regler entsprechend den Ergebnissen der analysierenden Einrichtung den Stellmotor so ansteuert, daß nur die durch Separation erkannten Eigenformen bei der Schwingungsdämpfung berücksichtigt werden.

14. Verfahren nach Anspruch 12 oder 13, dadurch gekennzeichnet, daß der Regler mehrere Stellmotoren ansteuert, die auf verschiedene Massen wirken.

15. Verfahren nach einem der vorangehenden Ansprüche, dadurch gekennzeichnet, daß zur kontinuierlichen Messung und Verarbeitung im Regler (5) drei skalare Größen ausgewählt werden aus den sechs die Bewegung eines Punktes der schwingungsfähigen Struktur (1) und der zweiten Masse zu jedem Zeitpunkt vollständig beschreibenden kinematischen Größen, welche sind: absolute Lage, Geschwindigkeit und Beschleunigung des Punktes der zu bedämpfenden Struktur sowie Lage, Geschwindigkeit und Beschleunigung der zweiten Masse relativ zum besagten Punkt der schwingungsfähigen Struktur.

16. Verfahren nach Anspruch 15, dadurch gekennzeichnet, daß die drei ausgewählten Größen: a) die Lage des Punktes der Struktur (1) sowie b) die Lage der zweiten Masse relativ zur Verbindungsstelle (4) auf der Struktur (1) und c) die Geschwindigkeit der zweiten Masse relativ zur Verbindungsstelle (4) sind.

17. Verfahren nach Anspruch 15, dadurch gekennzeichnet, daß die 3 ausgewählten Größen: a) die Beschleunigung des Punktes der Struktur (1) sowie b) die Lage der zweiten Masse relativ zur Verbindungsstelle (4) auf der Struktur (1) und c) die Geschwindigkeit der zweiten Masse relativ zur Verbindungsstelle (4) sind.

18. Verfahren nach Anspruch 16 oder 17, dadurch gekennzeichnet, daß die Beschleunigung der Struktur und/oder die Absolutposition der Struktur an mehreren Meßorten bestimmt wird.

19. Verfahren nach Anspruch 16 oder 17, dadurch gekennzeichnet, daß die Lage (LS) des Punktes der Struktur (1) durch Messung der Krümmung der Struktur ermittelt wird.

20. Verfahren nach Anspruch 19, dadurch gekennzeichnet, daß die Krümmung mit Hilfe von mindestens einem an der Struktur angebrachten Dehnmeßstreifen gemessen wird.

21. Verfahren nach einem der vorangehenden Ansprüche, dadurch gekennzeichnet, daß neben dem Stellmotor (2) ein weiteres kraftausübendes Element in Form eines Federelementes (8) vorhanden ist.

22. Stellmotor zur Durchführung des Verfahrens nach einem der Ansprüche 1 bis 21, dadurch gekennzeichnet, daß er zur Kraftausübung ein mindestens einen Piezo-Kristall enthaltendes Element enthält.

23. Stellmotor zur Durchführung des Verfahrens nach einem der Ansprüche 1 bis 21, dadurch gekennzeichnet, daß zur Kraftausübung mindestens ein magnetostriktives Element verwendet wird.

24. Stellmotor zur Durchführung des Verfahrens nach einem der Ansprüche 1 bis 21, dadurch gekennzeichnet, daß er zur Kraftausübung ein durch ein fluides Druckmedium veränderbares Volumen enthält.

25. Stellmotor nach Anspruch 24, dadurch gekennzeichnet, daß er ein durch das fluide Druckmedium angetriebenes Zylinder/Kolben-System enthält, das eine eindimensionale Bewegung in zwei Richtungen erzeugen kann.

26. Stellmotor nach Anspruch 22,23,24 oder 25, ohne dessen Rückbezug auf Anspruch 1, dadurch gekennzeichnet, daß der Dämpfer in den Stellmotor integriert ist.

27. Vorrichtung zur Ausführung des Verfahrens nach Anspruch 7, dadurch gekennzeichnet, daß die Vorrichtung die bewegliche Zusatzmasse sowie den Stellmotor enthält und daß sie zur Befestigung an der zu bedämpfenden Struktur der Papiermaschine geeignet ist.

LZ

3

2

LS

1

7

7

7

5

6

**Fig. 1**

LZ'

3'

2'

7

LS'

6

1

2

LS

3

6

5

LZ

**Fig. 2**

Fig. 3

Fig. 4

Fig. 5

Fig. 6

Fig. 7

Europäisches
Patentamt

# EUROPÄISCHER RECHERCHENBERICHT

Nummer der Anmeldung

EP 89 11 6429

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,D | GB-A-2120697 (BELOIT CORP.)<br>* Ansprüche 1, 3-6; Figuren 1, 3, 4 * | 1 | D21G1/00<br>F16F7/10 |
| A | | 8, 21 | |
| Y | PATENT ABSTRACTS OF JAPAN<br>vol. 11, no. 255 (M-617)(2702) 19 August 1987,<br>& JP-A-62 62036 (MITSUBISHI ELECTRIC CORP.) 18 März 1987,<br>* das ganze Dokument * | 1 | |
| A | | 8, 9,<br>11-13,<br>17, 21,<br>25, 27 | |
| A | US-A-4083433 (K.P.GEOHEGAN ET AL.)<br>* Ansprüche 1-3; Figuren 1, 2, 5 * | 1, 8,<br>10, 14,<br>23, 26,<br>27 | |
| A | GB-A-2126759 (NV PHILIPS' GLOEILAMPENFABRIEKEN)<br>* Seite 2, Zeilen 40 - 54; Ansprüche 1-3, 6, 8, 9; Figur 1 * | 1, 3, 8,<br>9,<br>11-13,<br>15-18<br>21,<br>23-25,<br>27 | **RECHERCHIERTE SACHGEBIETE (Int. Cl.5)**<br><br>D21G<br>F16F<br>D21F |
| A | PATENT ABSTRACTS OF JAPAN<br>vol. 12, no. 91 (M-679)(2938) 24 März 1988,<br>& JP-A-62 228730 (AGENCY OF IND. SCIENCE & TECHNOL.) 07 Oktober 1987,<br>* das ganze Dokument * | 6, 22 | |
| A | PATENT ABSTRACTS OF JAPAN<br>vol. 11, no. 157 (M-590)(2604) 21 Mai 1987,<br>& JP-A-61 286634 (MEIRITSU SEIKI K.K.) 17 Dezember 1986,<br>* das ganze Dokument * | 1, 10,<br>11, 22,<br>27 | |

Der vorliegende Recherchenbericht wurde für alle Patentansprüche erstellt

| Recherchenort | Abschlußdatum der Recherche | Prüfer |
|---|---|---|
| DEN HAAG | 02 FEBRUAR 1990 | SINGER G.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument –
......................................................................
& : Mitglied der gleichen Patentfamilie, übereinstimmendes Dokument

EPO FORM 1503 03.82 (P0403)